# EUROPEAN PATENT APPLICATION

(11) **EP 3 178 704 A1**
(43) Date of publication of application: **14.06.2017**
(21) Application number: 15199222.9
(22) Date of filing: 10.12.2015
(51) Int. Cl.: B60R 16/03, G05B 19/042

(54) **TERMINAL CONTROL DEVICE FOR INTERFACING A DIGITAL PROCESSING UNIT WITH ELECTRIC OUTPUT LINES IN A MOTOR VEHICLE**

(71) Applicant: Continental Automotive GmbH, 30165 Hannover (DE)
(72) Inventor: Schnell, Josef, 88142 Wasserburg (DE); Michael, Thomas, 85120 Hepberg (DE); Feldbauer, Martin, 93109 Wiesent (DE); Blechle, Eduard, 93051 Regensburg (DE); Pöpperl, Andreas, 93093 Donaustauf (DE); Yakub, Mohammed, Rochester Hills, MI 48309 (US); Duprey, Ryan David, Rochester Hills, MI 48307 (US); Shin, SunMoo, Icheon-si Gyeonggi-do 467-040 (KR); Tornare, Jean-Marc, 31770 Colomiers (FR)

(57) **Abstract**

The invention is concerned with a terminal control device (7) for interfacing a digital processing unit (6) with electric output lines (13) in a motor vehicle (1), comprising electric input lines (16) and combinatory units (17) each coupled to one of the output lines (13) and each designed to generate an output signal (12) as a function of several state signals (18, 19). The invention is characterized in that the terminal control device (7) comprises a digital data register (R), wherein a digital communication interface (14) is designed to receive digital state flags (15) from the processing unit (6) and to store the state flags (15) into the register (R) and wherein each combinatory unit (17) is coupled to the register (R) for receiving at least one of the state flags (15) as a respective one of the state signals (18).

## Description

The invention is directed to a terminal control device for interfacing a digital processing unit with electric output lines in a motor vehicle. The terminal control device is preferably a system basis chip (SBC). The invention is also concerned with an electronic control unit for a motor vehicle and a motor vehicle comprising the electronic control unit.

An electronic control unit within a motor vehicle can be in charge of providing a function called "terminal control". For "terminal control" one or more signals must be output that control the operating mode of other electronic control modules. To generate these outputs, a digital processing unit may be provided. Additionally, externally provided signals must be taken into consideration and combined logically with the signal provided by the digital processing unit, e.g., in order to prevent a false alarm caused by a malfunction of the processing unit.

In the following, this hardware for interfacing the digital processing unit with the output lines is referred to as terminal control device. In a terminal control device, discrete semiconductors like transistors or digital logic gates are used to logically combine the signals and provide the output signals at electric output lines. The terminal control device receives all input signals over electric input lines. The more input signals are to be considered the more input lines must be provided. This increases the hardware expenditure for providing the terminal control device.

Moreover, even when supply voltage is unstable like it is during cranking of the motor vehicle, the output signals must be stable. This is because the output determines the operating mode of other electronic control modules. To ensure stable output some of the signals inside the control logic and also the output signals should be latchable. In case the output of the terminal control device must be latched, even more components need to be used.

In the document US 8,618,780 B2 a multimode voltage regulator is described that comprises an output for providing a regulator output voltage and an output current to load. The multimode voltage regulator may be integrated into a system basis chip, SBC. The multi-voltage regulator may stabilize the supply voltage for the processing unit.

It is known from the prior art that a system basis chip SBC may communicate with a digital processing unit over a serial peripheral interface, SPI.

One object of the present invention is to provide a terminal control device that may be provided with low hardware expenditure.

The object is achieved by the subject matter of the independent claims. Embodiments of the invention providing further advantages are given by the features of the dependent claims.

The invention provides a terminal control device for interfacing a digital processing unit with electronic output lines in a motor vehicle. The processing unit may be a microcontroller. The terminal control device comprises electric input lines for receiving input signals. For controlling the output signals of the output lines, the terminal control device comprises combinatory units for logically combining the input signals. A combinatory unit may comprise one or more logical units. A logical unit may be, e.g., an AND-unit (AND-gate) or an OR-unit (OR-gate) . Additionally or alternatively, a combinatory unit may comprise a look-up table.

Each combinatory unit is coupled to one of the output lines for generating or controlling its output signal. Each combinatory unit is designed to generate or control the output signal as a function of several state signals. For receiving at least one of the state signals, the combinatory unit is coupled to at least one of the input lines for receiving the input signal of that input line as a state signal that it uses for determining the output signal.

However, the inventive terminal control device does not need dedicated electric input lines for receiving an input signal from the digital processing unit. Instead, the terminal control device comprises a digital data register. A digital communication interface is designed to receive digital state flags from the processing unit and to store these state flags into the register. Each state flag may indicate one state. Therefore each state flag represents one state signal. Each combinatory unit is coupled to the register for receiving at least one of the state flags as a respective state signal that it uses for determining the output signal.

The invention comprises the advantage that the digital processing unit itself is not connected to the terminal control device by several electric input lines wherein each input line is used for transferring one of the state flags. Instead, the state flags are transferred over one common communication line that is provided by the communication interface. The state flags are provided as the content of the register which in turn is coupled to each of the combinatory units. The hardware expenditure for connecting the digital processing unit to the terminal control unit is thus reduced in comparison to providing one dedicated electric input line for each of the state flags to be transferred to or to be considered within the terminal control device.

The invention also comprises optional embodiments whose features provide additional advantages.

In one embodiment the communication interface is a serial peripheral interface, SPI. This provides the advantage that all state flags may be transferred over one single electric communication line by means of a serial communication protocol.

In one embodiment at least one of the combinatory units comprises a look-up table. The look-up table is used for determining the value of the output signal as a function of the respective state value of each of the received state signals. By programming the look-up table, the combinatory logic may be freely set or configured according to a predetermined logical pattern which is needed in the terminal control device.

In one embodiment, several of the combinatory units are coupled to a common output line over a flip-flop for providing the output signal as a latched signal. A flip-flop provides the advantage that on the basis of at least one of the combinatory units, a control signal may be provided to the set-input of the flip-flop. In parallel, using at least one other combinatory unit, an error may be observed and a fail signal may be provided which may be transferred to the reset-input of the flip-flop. Moreover, a flip-flop provides a latched signal whose current value may be reconstructed after a fluctuation or variation in the power supply.

In one embodiment at least one of the combinatory units is coupled to the register over a switching unit. The switching unit is designed to alternately couple the combinatory units to the register and to one of the input lines, wherein a switching state of the switching unit is controlled by a switching flag. This embodiment provides the advantage that the combinatory unit may be decoupled from the processing unit and may receive two different input signals from input lines as respective state signals.

In one embodiment, the terminal control device comprises an internal error detection unit and the switching unit is designed to couple the combinatory unit to an output of the internal error detection unit. The error detection unit may be designed to signal a low voltage and/or a failure of the processing unit.

In one embodiment a data memory unit for storing default register data or default register values is provided. The register is designed to store the default register data as the state flags, if a failure signal is received. This embodiment provides the advantage that a safe state may be obtained in the terminal control signal whenever a failure signal signals an error. The failure signal may be the said output signal of the error detection unit or a different signal.

In one embodiment the terminal control device is a system basis chip, SBC. In other words, the at least one combinatory unit is integrated in a SBC. Additionally, the SBC comprises at least one communications bus interface and/or a voltage regulator and/or watch dog unit for supervising the processing unit. A communication bus interface may be provided for a CAN-bus (CAN-controller area network) or a LIN-bus (LIN-local interconnect network) . Providing a communication bus interface has the advantage that some or all of the input signals may be received over the communication bus. A voltage regulator provides the advantage that the processing unit together with the at least one combinatory unit may all be provided with a stabilized supply voltage. A watch dog unit for supervising the processing unit provides the advantage that a fail signal may be generated, if the processing unit ceases to responds to the watch dog unit.

In one embodiment the terminal control device comprises electric contacting pins for electrically coupling at least one signal source to the terminal control device and for electrically coupling at least one driving unit to the terminal output lines. A signal source can be, e.g., a further processing unit and/or a sensor signal and/or a signal provided by an external electronic control unit (ECU) . A driving unit is an electric switching device for controlling an electric current as a function of the output signal received over the output line.

The number of pin is smaller than the combined number of input lines and output lines of the terminal control device. For connecting the pins to the lines the pins are coupled to the input lines and the output lines over a switching matrix. This embodiment provides the advantage that associating pins with the input lines and the output lines may be freely configured on the basis of configuration data for the switching matrix. In one embodiment at least one of the pins is coupled to the switching matrix over a debounce filter unit for debouncing an external signal. The debounce filter unit is designed to change a state of a filter output signal, only if after a change of state of the external signal the external signal has kept its new state at least for a predeterminable time value. The time value may be in an interval from 0 seconds to 5 seconds. This embodiment provides the advantage that short term fluctuations of the supply voltage lasting less than the time value do not trigger the terminal control device.

In one embodiment a current or active configuration of the terminal control device is controlled by configuration data. For example, the switching state of the switching matrix may be set by configuration data. Similarly, each or some of the combinatory units may comprise a programmable logical unit which may be switched between an AND-state and an OR-state. Such a switching state may also be controlled by configuration data. The content of said look-up tables may also constitute configuration data.

The configuration data is encoded and stored in the terminal control device on the basis of an error detection coding in a non-volatile data storage. One example for an error detection coding is a cyclic redundancy check, CRC. The embodiment provides the advantage that the correctness of the configuration may be verified directly by checking the error detection coding of the configuration data. Using a non-volatile data storage provides the advantage that the terminal control device may function as designed independent of the state of health of the processing unit.

The invention also comprises an electronic control unit for a motor vehicle. The electronic control unit comprises a processing unit and an embodiment of the inventive terminal control device. The digital processing unit is coupled to the terminal control unit over a digital communication interface of the terminal control device. The electronic control unit comprises the advantage that the digital processing unit may be connected to the terminal control device with comparatively low hardware expenditure.

In one embodiment an additional processing unit is coupled to the terminal control device over at least one of the input lines of the terminal control unit. This provides the advantage that at least one of the output signals may be calculated on the basis of two separate and independent processing units. In other words, redundancy is provided for controlling other electronic control modules in the motor vehicle.

The invention is also directed to a motor vehicle comprising an embodiment of the electronic control unit. In one embodiment at least one output line of the terminal control device of the electronic control unit is coupled to a respective drive unit for controlling an electric switch. The drive unit may be provided on the basis of a transistor. The electric switch may be provided on the basis of the relay. The motor vehicle comprises the advantage that the electric switch is controlled not only by one single processing unit, but on the basis of state signals of several signal sources.

In the following, several embodiments of the invention are described. The figures show:
- Fig. 1: an schematic presentation of an embodiment of the inventive motor vehicle;
- Fig. 2: a schematic representation of an embodiment of the inventive terminal control device;
- Fig. 3: a schematic representation of another embodiment of the inventive terminal control device;
- Fig. 4: a schematic representation of a general combinatory logic comprised in the terminal control device of Fig. 3;
- Fig. 5: a schematic representation of a latch with flip-flops comprised in the terminal control device of Fig. 3;
- Fig. 6: a schematic representation of a switching matrix comprised in the terminal control device of Fig. 3; and
- Fig. 7: diagrams with schematic time courses of an external signal received at the switching matrix and a filtered signal generated by a debounce filter unit of the switching matrix.

Each embodiment explained in the following is a preferred embodiment of the invention. However, in the embodiment, the described components of the embodiment each represent individual features of the invention to be considered independently of each other, which each develop the invention also independently of each other and thereby are also to be regarded as a component of the invention in individual manner or in another than the shown combination. Furthermore, the described embodiment can also be supplemented by further features of the invention already described.

In the figures elements that provide the same function are marked with identical reference signs.

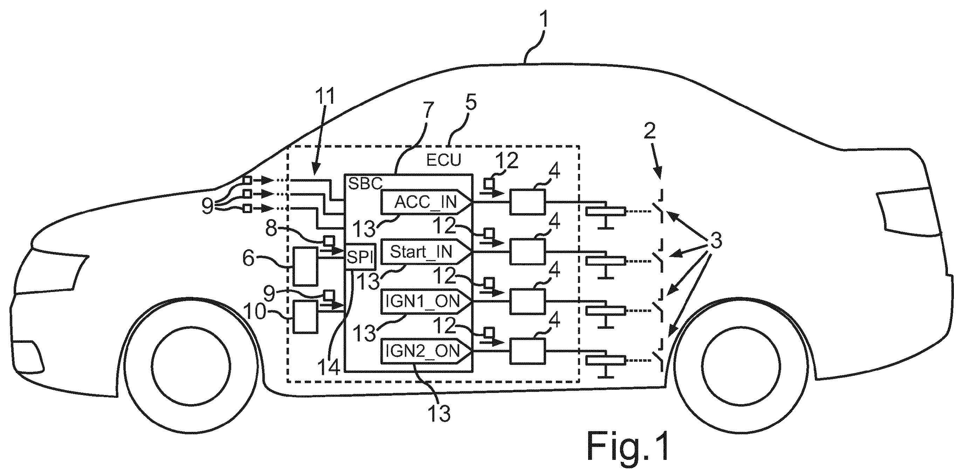

Fig. 1 shows a motor vehicle 1. Motor vehicle 1 can be for example a passenger car. Motor vehicle 1 comprises an electric system 2. The electric system 2 may connect electric sources (not shown) with electric loads (not shown). The electrical system 2 comprises electric switches 3 for connecting to and disconnecting from the electrical sources. Each electrical switch 3 may be provided as a relay or a transistor. For controlling each electric switch 3 a respective drive unit 4 is provided. Each drive unit 4 is designed to control a current for driving one electric switch 3. For example, an electric current for the electromagnet of a relay may be switched or controlled by a drive unit 4. The drive units may be part of an electronic control unit 5 (ECU). The commands for switching the drive unit 4 may be generated by a processing unit 6. For interfacing the digital processing unit 6 with the drive units 4, a terminal control device 7 is provided. The terminal control device 7 can be provided as a part of an integrated circuit of a system basis chip SBC.

For safety reasons vital functions like activating an electric switch 3 in the electric system 2 must not be activated based on only the one input signal 8 of the processing unit 6. Such functions must only be activated based on at least two independent input signals 8, 9. These input signals must be provided by two largely independent hardware parts. The electronic control unit 5 may therefore comprise a second digital processing unit 10. Each of the processing units 6, 10 may be a microcontroller or a microprocessor. Additionally or alternatively to the second processing unit 10, at least one signal line 11 may be provided for receiving an input signal 9.

For transmitting the input signal 8, the processing unit 6 is connected to the terminal control device 7 over a digital communication interface 14. The communication interface 14 may be according to the standard SPI (serial peripheral interface). Such communication line (usually SPI) is always present on complex SBCs. The microcontroller attached to the SPI provides the signal via SPI instead of a discrete signal. For each signal to be provided by the microcontroller this saves an output on the microcontroller and an input on the terminal control logic.

The processing unit 10 may be connected to the terminal control device over a wire or a conductor track for transmitting the input signal 9 as an analogue discrete signal. In other words, the discrete signals are asynchronous signals, unlike, e.g., digital signals in a digital device where all components share a common clock.

The terminal control device 7 receives input signals and combines them according to a predefined logic for generating one output signal 12 at output lines 13.

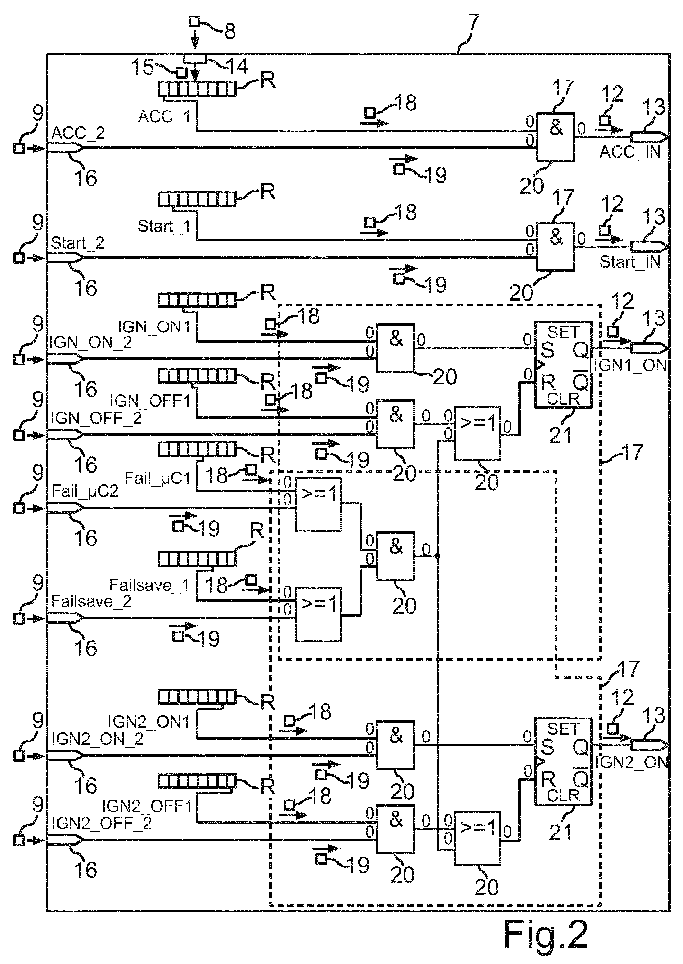

Fig. 2 shows a terminal control device 7 as it may be provided in the electronic control unit 1. For every output signal 12 to be generated, two discrete input signals 8, 9 (like ACC_1 and ACC_2) are combined to provide the corresponding output signal 12 (like ACC_IN, Start_IN, IGN1_ON, IGN2_ON) to control a driver unit 4, like, e.g., a relay driver. For safety reasons information about failing microcontrollers (like Fail_µC1 and Fail_µC2) can be processed as well.

For receiving the input signal 8 of the processing unit 6, the input signal 8 received as digital data over the communication interface 14. The digital data of input signal 8 comprise state flags 15.

The remaining input signals 9 are received as line signal over electric input lines 16.

The combination of input signal 8, 9 for generating the output signal 12 is achieved by means of combinatory units 17. Each combinatory unit 17 is designed to receive independent state signals 18, 19. Each state signal 18 is provided not via discrete signal input line 16 from processing unit 6. Each state signal 18 thus represents one of the state flags 15. The state flags 15 are stored in a digital data register R of the terminal control device 7. Each combinatory unit 17 is connected to the register R. Note that in each of Figs. 2, 4, 5, 6, several copies of register R are shown. This shall only illustrate which of the state flags 15 is used by the respective combinatory units 17.

Each state signal 19 is received over one of the input lines 16. Thus, each state signal 19 is identical to one of the external input signals 9.

Each combinatory unit 17 may comprise one or more logical gates or logical units 20, like e.g. an AND-unit or AND-gate (symbol: &) or an OR-unit or OR-gate (symbol: >=1). A combinatory unit 17 may also comprise a latch 21, like e.g. a set-reset-flip-flop or RS-flip-flop.

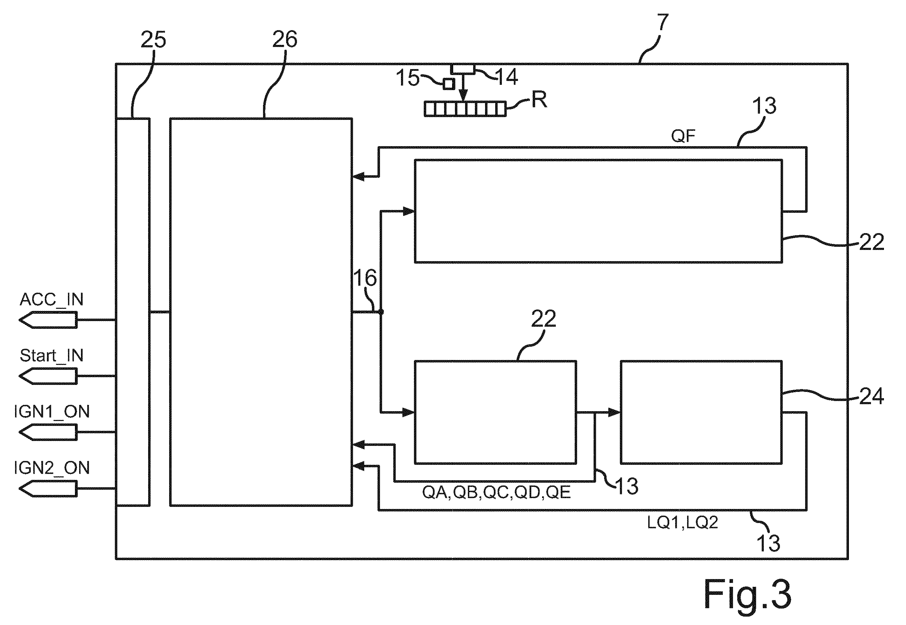

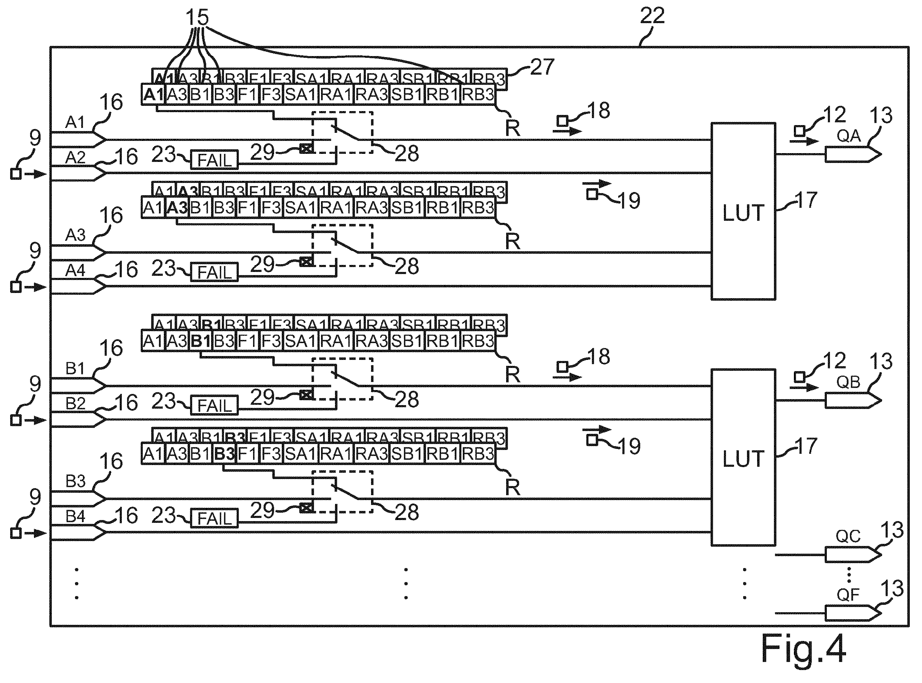

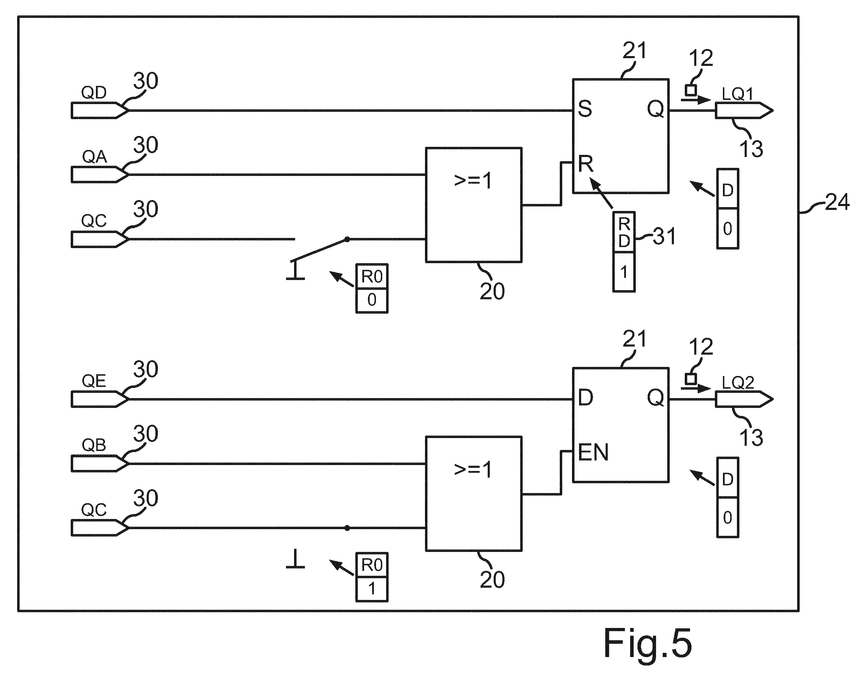

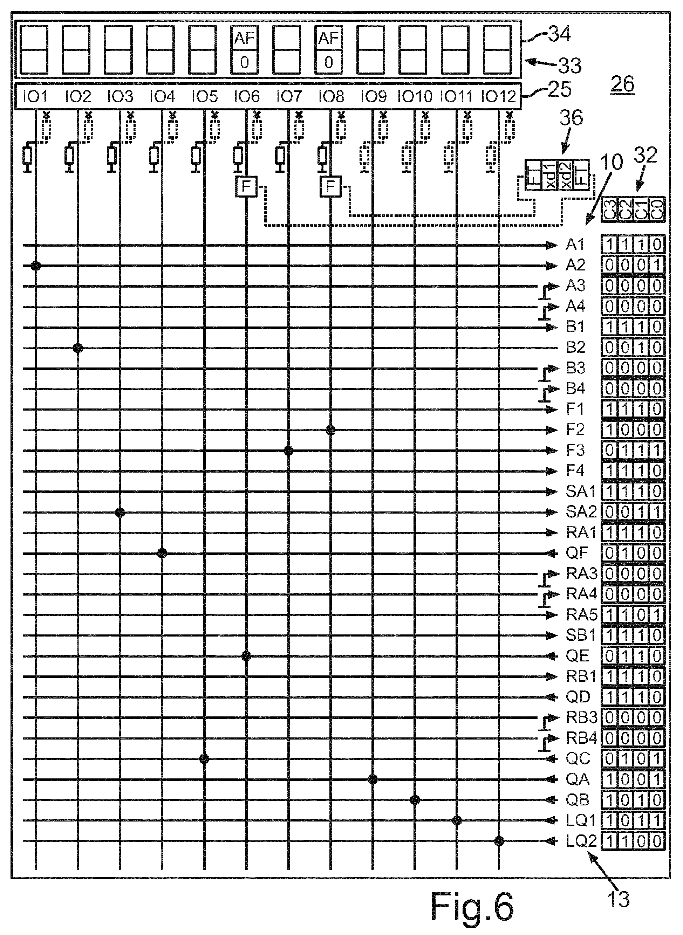

Fig. 3 illustrates another terminal control unit 7 which may be provided in the motor vehicle 1. To serve different needs the programmability of the terminal control device 7 must be flexible. To this end, it comprises a general combinatory logic 22 (see Fig. 4) and a latched logic 24 (see Fig. 5) . For receiving the input signals 9 and for outputting the output signals 12, a set of electric pins 25 is provided. For interconnecting the pins 25 with input lines 16 and output lines 13 of the general combinatory logic 22and the latched logic 24, a switching matrix 26 (see Fig. 6) is provided.

Fig. 4 gives an overview of the general combinatory logic 22. The combinatory logic 22 is based on look-up tables LUT whereby all possible logic combinations can be realized. The general combinatory logic 22 may comprise, e.g., three 4-input look-up tables and three 2-input lookup-tables. This is indicated by six output lines QA to QF of the six look-up tables. However, for the sake of clarity, only two 4-input look-up tables are shown in Fig. 4. In general, any number of look-up tables may be provided. Each look-up table LUT constitutes a combinatory unit 17 for combining the state signals 18, 19. Data for two of the four state signals 18, 19 for each look up table can be provided via the communication channel of the communication interface 14 of the SBC. This data is stored as the state flags 15 in the data value register R.

In case of failure events like missing communication or watchdog timeout, data out of a default register memory 27 can be fetched that ensure a safe system state. The data of the default register memory 27 must be protected against erroneously reprogramming. This can be done by "one time programmability" using e.g. EPROM technology.

Switching units 28 may be provided to selectively connect the combinatory unit 17, e.g. the look-up table LUT, to either the register R or one of the input lines 16 or an output 23 of an error detection unit (not shown) . At output 23, the error detection unit may signal failure events FAIL like missing communication with processing unit 6 or a watchdog timeout. A switching state of each switching unit 28 may be selected or set by setting a switching flag 29.

In the latched logic 24 according to Fig. 5, may comprise latches 21 which can be provided by configurable flip-flops. These can be set as RS-Latch (set-reset-flip-flop) with static inputs by setting a configuration flag D or as D-Latch (data flip-flop) by resetting flag D. Each input 30 of the latched logic 24 is connected to one output of the lookup tables LUT of the general combinatory logic 22. Each set-input S (for D-Latch D) is connected to one output of the 2-input LUT. Each reset-input R (for D-Latch EN) can be accessed by two logically combined OR inputs. Both latches 21 can be reset by output QC which is the output of one of the 4-input LUT.

In case the latches 21 only need up to four inputs at the Reset R (for D-Latch EN) input the input QC can be disabled by resetting bit R0 (R0=0).

In case of an RS-Latch the Latch 21 can be configured either with dominating reset-input (RD=1) or dominating set-input (RD=0). This is configured by setting a configuration flag 31.
In Fig. 6, the switching matrix 26 and the pins 25 are shown. To interface to the outside of the terminal control device 7, each input line 16 of the logic 22, 24 can be routed to one of up to twelve IO-pins 25 (IO - input output) . In order to route e.g. logic input line A2 to input pin I02, its related 4 bit addressing register 32 holds the value 2 (0010b). In case the register holds value Fh (1111b) the related logic input line 16 is wired to 1. In case the register 32 holds value 0 (0000b) the related logic input line 16 is wired to 0. In case the register 32 holds value Eh (1110b) the related logic 22, 24 accesses the data value register R whose content is provided via the communication channel of the communication interface 14. In other words, the value Eh sets the switching flag 29. In case the address register holds the value 1101b the related logic 17 evaluates the FAIL bit of the SBC.

To each input pin 25, various configuration bits 33 determine its configuration. Most of them can be accessed via a general control register 34 which is part of the hosting integrated circuit. Each output signal 12 of the logic 22, 24 can be routed to one of the twelve IO-pins 25. So to route logic output QA to I09 its related 4-bit register 32 holds the value 9 (1001b). In case the register 32 holds value 0 (0000b), the related logic output signal 12 is not connected to any IO pin 25.

If configured as input, some or all IO pins 25 can filter/debounce incoming input signals 9 by means of a filter F with a filter time Tdebounce. In Fig. 6, only two filters F are shown.

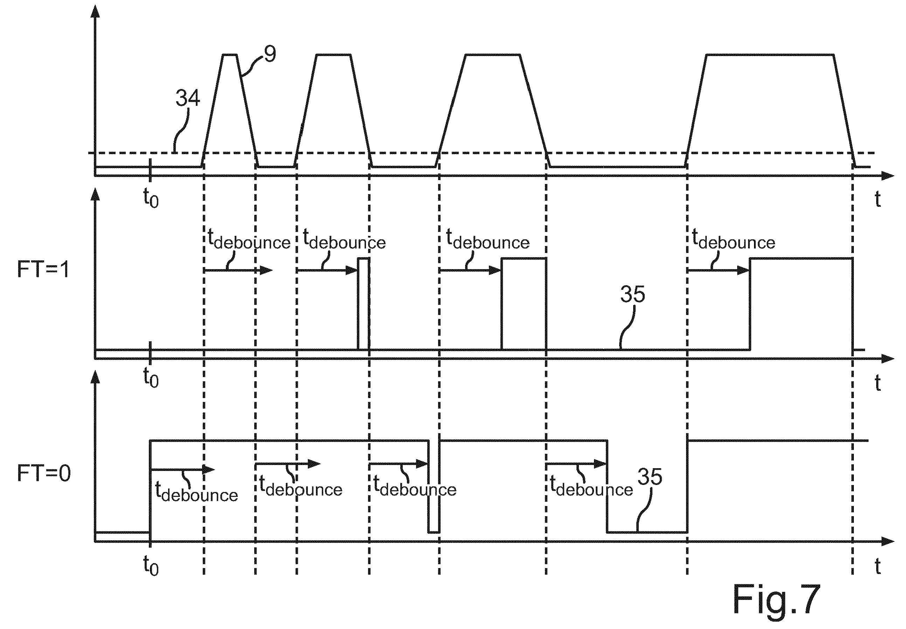

The function of filter F is explained on the basis of the diagrams of Fig. 7 showing signal values over time t. The filter time Tdebounce is triggered by a level change of the input signal 9 crossing the switching threshold 34. In case the level remains on the same side of the switching threshold 34 for the time value of filter time Tdebounce, the input signal 9 will become effective at the output of the filter F as filter output signal 35. The filter time Tdebounce can be set to e.g. 0s, 0.5s, 1s or 2s for the IO pins 25 independently via bits Xd1 and Xd2 of filter configuration register 36. The filters can be applied for each of the four pins via a configuration bit AF (Apply Filter).

Via bit FT of register 36 a filter type can be set to either debounce low signals only (FT=0) or to debounce high signals only (FT=1). To avoid undesired behaviour the debouncing will start at a certain start-up time t0 after providing a supply voltage to the terminal control device 7.

When high signals are debounced (FT=1) the debounced the filter assumes a low signal to be present for more than tdebouce before t0. So the filtered output 35 starts with a low signal at t0. When low signals are debounced (FT=0) the debounced filter F assumed a high signal to be present for more than tdebounce before t0. So the filtered output 35 starts with a high signal at t0.

Overall, the terminal control device 7 can be provided by integrating a user programmable logic with output latch in a system basis chip, SBC. The programmable logic inside the SBC is able to combine the input signal 8, 9 in a user defined way. The logic 22, 24 is able to latch signals inside the control logic and also the output signals. This helps to support a stable output signal.

The input signals 8, 9 do not necessarily need to be applied physically on the SBC input pins 25. Since they usually are at least partly generated by a microcontroller, or more generally a digital processing unit 6, they can be provided by an SPI communication channel. In this case the information about a signal would be stored inside the SBC in a corresponding register R.

The configuration of the logic (program), e.g. the configuration data 29, 32, 33, 34, 36, is stored inside the SBC in a non-volatile memory. The implementation of a CRC function notifies the system in case of the unlikely event that the configuration is corrupted.

The terminal control device 7 gives following advantages:
Signals that need to be processed for terminal control function are usually at least partly output by one of the microcontrollers that are assembled on the ECU. Instead of outputting these signals on a separate pin the signal information could be sent to the SBC via communication line. The SBC stores the information in a data value register R. The SBC can combine the data/signals in the programmable logic of the combinatory units 17 and provide the output as a discrete hardware output signal 12 to an appropriate integrated circuit like a smart switch.

In case there is a problem on the communication line and communication cannot be established between microcontroller and SBC, the SBC fetches the data from the default value register 27. The data of the default value register 27 should be set in a way that a safe state for the system is ensured.

The integration into an SBC makes it easier to minimize any impact of unstable supply voltage. This is because the SBC generates internally a stable voltage which is widely independent from the supply voltage. The control logic is supplied out of this stable internally generated voltage. The SBC monitors the microcontroller and indicates microcontroller failures. For terminal control microcontroller failures must be taken into consideration. Since both, watchdog and programmable logic are located inside the SBC, there is no need to spend several separate inputs for microcontroller failure or limp home failure signals. Correct configuration of the logic can be detected by performing CRC check. Saving of PCB space and component assembly, since less discrete components and logic gates are needed for this function.

Simplification of Hardware design and minimizing of HW Design effort, since all inputs needed for terminal control only must be routed to the SBC. Changes in the logic algorithm can be made much faster without any need for layout change.

Overall, the example shows how a programmable logic integrated in an SBC is provided by the invention.

### Reference signs

- 1: motor vehicle
- 2: electric system
- 3: electric switch
- 4: drive unit
- 5: electronic control unit
- 6: processing unit
- 7: terminal control device
- 8: input signal
- 9: input signal
- 10: processing unit
- 11: signal line
- 12: output signal
- 13: output line
- 14: communication interface
- 15: state flags
- 16: input lines
- 17: combinatory unit
- 18: state signal
- 19: state signal
- 20: logical unit
- 21: latch
- 22: general combinatory logic
- 23: output
- 24: latched logic
- 25: electric pins
- 26: switching matrix
- 27: memory
- 28: switching unit
- 29: switching flag
- 30: input
- 31: configuration flag
- 32: addressing register
- 33: configuration bits
- 34: switching threshold
- 35: filter output signal
- 36: filter configuration register
- LUT: look-up table
- R: data register
- Tdebounce: filter time

## Claims

1. Terminal control device (7) for interfacing a digital processing unit (6) with electric output lines (13) in a motor vehicle (1), comprising:
- electric input lines (16) for receiving input signals (9),
- several combinatory units (17) each coupled to at least one of the output lines (13) for controlling an output signal (12) of the output line (13) as a function of several state signals (18, 19), wherein the combinatory unit (17) is coupled to at least one of the input lines (16) for receiving the input signal (9) of the input line (16) as one of the state signals (19), **characterized in that** the terminal control device (7) comprises a digital data register (R), wherein a digital communication interface (14) is designed to receive digital state flags (15) from the processing unit (6) and to store the state flags (15) into the register (R) and wherein each combinatory unit (17) is coupled to the register (R) for receiving at least one of the state flags (15) as one of the state signals (18).

2. Terminal control device (7) according to claim 1, wherein the communication interface (14) is a serial peripheral interface, SPI.

3. Terminal control device (7) according to any of the preceding claims, wherein at least one of the combinatory units (17) comprises a look-up table (LUT).

4. Terminal control device (7) according to any of the preceding claims, wherein several combinatory units (17) are coupled to a common output line (13) over a flip-flop (21) for providing the output signal (12) as a latched signal.

5. Terminal control device (7) according to any of the preceding claims, wherein at least one of the combinatory units (17) is coupled to the register (R) over a switching unit (28), wherein the switching unit (28) is designed to alternately couple the combinatory unit (17) to the register (R) and to one of the input lines (16), wherein a switching state of the switching unit (28) is controlled by a switching flag (29).

6. Terminal control device (7) according to claim 5, wherein the terminal control device (7) comprises an internal error detection unit and the switching unit (28) is designed to couple the combinatory unit (17) to an output of the internal error detection unit.

7. Terminal control device (7) according to any of the preceding claims, wherein a data memory unit (27) for storing default register data is provided and wherein the register (R) is designed to store the default register data as the state flags (15), if a failure signal is received.

8. Terminal control device (7) according to any of the preceding claims, wherein the terminal control device (7) is a system basis chip, SBC, comprising at least one communications bus interface and/or a voltage regulator and/or a watchdog unit for supervising the processing unit.

9. Terminal control device (7) according to any of the preceding claims, wherein the terminal control device (7) comprises contacting pins (25) for electrically coupling at least one signal source to the terminal control device (7) and for electrically coupling at least one driving unit (4) to the terminal output lines (13), wherein the number of pins (25) is smaller than the combined number of input lines (16) and output lines (13) and wherein the pins (25) are coupled to the input lines (16) and the output lines (13) over a switching matrix (26).

10. Terminal control device according (7) to claim 9, wherein at least one of the pins (25) is coupled to the switching matrix (26) over a debounce filter unit (F) for debouncing an external signal (9), wherein the debounce filter unit (F) is designed to change a state of a filter output signal (35), only if after a change of state of the external signal (9) the external signal (9) has kept its new state at least for a predetermined time value (Tdebounce).

11. Terminal control device (7) according to any of the preceding claims, wherein an active configuration of the terminal control device (7) is controlled by configuration data (32, 33) and wherein the configuration data (32, 33) is encoded and stored with an error detection coding in a non-volatile data storage.

12. Electronic control unit (5) for a motor vehicle (1), comprising a processing unit (6) and a terminal control device (7) according to any of the preceding claims, wherein the processing unit (6) is coupled to the terminal control device (7) over a digital communication interface (14) of the terminal control device (7).

13. Electronic control unit (5) according to claim 12, wherein an additional processing unit (10) is coupled to the terminal control device (7) over at least one of the input lines (16) of the terminal control unit (7).

14. Motor vehicle (1) comprising an electronic control unit (5) according to claim 12 or 13, wherein at least one output line (13) of the terminal control device (7) of the electronic control unit (5) is coupled to a respective drive unit (4) for controlling an electric switch (3).
